# EUROPÄISCHE PATENTSCHRIFT

(11) **EP 0 406 166 B1**
(45) Veröffentlichungstag und Bekanntmachung des Hinweises auf die Patenterteilung: **11.09.1996**
(21) Anmeldenummer: 90810450.8
(22) Anmeldetag: 20.06.1990
(51) Int. Cl.: C08G 59/40, C08J 5/24

(54) **Mit einer lösungsmittelfreien, härtbaren Epoxidmatrix imprägnierter Faserverbund**
Fibres impregnated with solvent-free curable epoxy matrix
Fibres imprégnées par une matrice époxy durcissable et sans solvant

(30) Priorität: 29.06.1989 CH 2409/89
(43) Veröffentlichungstag der Anmeldung: 02.01.1991
(73) Patentinhaber: CIBA-GEIGY AG, 4002 Basel (CH)
(72) Erfinder: Gruber, Urs, Dr., CH-4144 Arlesheim (CH); Stockinger, Friedrich, CH-1784 Courtepin (CH); Manso, Elvio, CH-6512 Giubiasco (CH)

(56) Entgegenhaltungen:
- EP-A- 0 133 154
- EP-A- 0 173 137
- EP-A- 0 252 007
- PATENT ABSTRACTS OF JAPAN vol. 8, no. 3 (C-203)(1440) 7. Januar 1984

## Beschreibung

Bei der Herstellung von Prepregs auf der Basis von härtbaren, einen Härter enthaltenden, lösungsmittelfreien Epoxidharzgemischen wird üblicherweise nach dem Schmelzauftragsverfahren gearbeitet, wobei die Epoxidharz-Härtermischung (Epoxidharzmatrix) auf die Temperatur erhitzt wird, bei der die Viskosität der Schmelze genügend tief ist, um das Verstärkungsmaterial gut zu benetzen und zu imprägnieren. Dabei besteht aber die Gefahr, dass es in der Schmelze zu einer unkontrollierbaren Reaktion zwischen Harz und Härter kommt, d.h., die Härtung so weit fortschreitet, dass unbrauchbare Prepregs erhalten werden.

In der EP-A-0 133 154 wird eine lösungsmittelfreie Epoxidharzmatrix für Prepregs offenbart, die ein flüssiges Epoxidharz und als Härter ein aliphatisches oder cycloaliphatisches primäres Monoamin enthält. Die damit hergestellten Prepregs sind nicht geruchfrei, da sie Monoamine mit hohem Dampfdruck enthalten, so dass bei der Verarbeitung solcher Prepregs Vorsichtsmassnahmen zu treffen sind.

Es wurde nun gefunden, dass bestimmte flüssige β-Aminoalkohole, deren Gemisch untereinander oder deren flüssige Gemische mit bestimmten anderen Aminen als Härtungsmittel für Epoxidharze eingesetzt werden können, wobei diese im Gemisch mit einem Epoxidharz bei Raumtemperatur (RT) relativ rasch ein B-Stufenharz bilden, welches jedoch mehrere Tage bei RT lagerstabil ist und danach noch gute Verarbeitungseigenschaften, wie einen ausreichenden Harzfluss bei der Laminatherstellung, aufweist. Prepregs, die ein solches B-Stufenharz enthalten, sind praktisch geruchslos und lassen sich problemlos verarbeiten.

Gegenstand vorliegender Erfindung ist somit ein mit einer lösungsmittelfreien, härtbaren Epoxidharzmatrix imprägnierter Faserverbund, wobei zum Imprägniesen eine härtbare Epoxidharzmatrix, enthaltend
(a) ein flüssiges Epoxidharz oder ein flüssiges Epoxidharzgemisch,
(b) ein flüssiges β-Hydroxyamin der Formel I 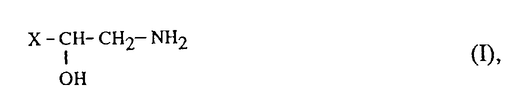 worin X für Phenyl oder den Rest R-O-CH₂- steht, wobei R ein alkylsubstituiertes Phenyl mit 1 bis 4 C-Atomen im Alkylrest bedeutet, ein flüssiges Gemisch von β-Hydroxyaminen der Formel I oder ein flüssiges Gemisch aus einem oder mehreren β-Hydroxyaminen der Formel I und einem von der Formel I verschiedenen primären Monoamin oder einem primären oder sekundären Diamin und gegebenenfalls
(c) ein katalytisch härtendes tertiäres Amin, verwendet wurde, wobei in der härtbaren Epoxidharzmatrix pro 1 Epoxidäquivalent des Epoxidharzes (a) 0,15 bis 1,2 Aminwasserstoffäquivalente der Aminkomponente (b) und 0 bis 0,1 Mole des tertiären Amins (c) enthalten sind.

Vorzugsweise sind in der zum Imprägnieren geeigneten härtbaren Epoxidharzmatrix pro 1 Epoxidäquivalent 0,7 bis 1,1 Aminwasserstoffäquivalente der Aminkomponente (b) und 0 bis 0,06 Mole des tertiären Amins (c) enthalten.

In einer bevorzugten Ausführungsform ist der Faserverbund mit einer Epoxidharzmatrix bestehend aus den Komponenten (a), (b) und (c) imprägniert.

Als Komponente (a) kommen beispielsweise die flüssigen Epoxidharze auf Basis von Bisphenol A oder F oder auf Basis von Phenolnovolaken oder deren Gemische in jedem Mischungsverhältnis in Betracht. Sie können mit einem reaktiven Verdünner, wie beispielswiese Phenyl- oder Kresylglycidylether, Butandioldiglycidylether oder Hexahydrophthalsäurediglycidylester, vorzugsweise in einer Menge von 3-50 Gew.%, bezogen auf die Gesamtmenge der Epoxidharze, oder mit Diglycidylanilin, vorzugsweise in einer Menge von 3-20 Gew.%, bezogen auf die Gesamtmenge der Epoxidharze, gemischt sein. Ferner sind auch Triglycidyl-p-aminophenol und Tetraglycidyl-p,p'-diaminodiphenylmethan, das mit Butandioldiglycidylether oder Diglycidylanilin gemischt sein kann, geeignete Gemische von Epoxidharzen.

Die genannten Epoxidverbindungen können auch in beliebigen Mischungen untereinander oder mit festen Epoxidharzen, die in der Epoxidharzmischung löslich sind, eingesetzt werden, sofern die Viskosität der Endmischungen bei Raumtemperatur kleiner als 4000 mPa·s, vorzugsweise kleiner als 1500 mPa·s ist.

Vorzugsweise enthält der erfindungsgemässe Faserverbund als Komponente (a) ein flüssiges Epoxidharz auf Basis von Bisphenol A oder F, enthaltend gegebenenfalls Butandiol-1,4-diglycidylether als reaktiven Verdünner.

Die erfindungsgemässen Faserverbunde enthalten vorzugsweise β-Hydroxyamine der Formel I, worin X Phenyl oder den Rest R-O-CH₂- bedeutet, wobei R ein alkylsubstituiertes Phenyl mit 1 bis 4 C-Atomen im Alkylrest darstellt. Die β-Hydroxyamine der Formel I sind bekannt, beispielsweise aus der EP-A-0 252 007, und können hergestellt werden, indem man Glycidylverbindungen der Formel II 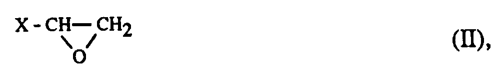 worin X die gleiche Bedeutung wie in Formel I hat, mit Ammoniak zu Verbindungen der Formel I umsetzt.

Stellt in der härtbaren Epoxidharzmatrix die Komponente (b) ein flüssiges Gemisch von β-Hydroxyaminen der Formel I dar, so verwendet man vorzugsweise ein Gemisch aus 2-Hydroxy-2-phenylethylamin mit 2-Hydroxy-3-(m-ethylphenoxy)-propylamin, 2-Hydroxy-3-(o-kresyloxy)-propylamln, 2-Hydroxy-3-(o-isopropylphenoxy)-propylamin oder 2-Hydroxy-3-(o-sek.-butylphenoxy)-propylamin oder ein Gemisch aus 2-Hydroxy-3-(o-kresyloxy)-propylamin mit 2-Hydroxy-3-(sek.-butylphenyloxy)-propylamin oder 2-Hydroxy-3-(o-isopropylphenoxy)-propylamin.

Verwendet man für die härtbare Epoxidharzmatrix als Komponente (b) ein flüssiges Gemisch aus einem oder mehreren β-Hydroxyaminen der Formel I und einem von der Formel I verschiedenen primären Monoamin, so ist dieses Monoamin im Gemisch vorzugsweise in Mengen von weniger als 50 Gew.%, insbesondere weniger als 30 Gew.%, bezogen auf alle Amine der Komponente (b), enthalten. Desgleichen beträgt bei Verwendung eines Gemisches aus einem oder mehreren β-Hydroxyaminen und einem primären oder sekundären Diamin als Komponente (b) der Anteil des Diamins vorzugsweise weniger als 50 Gew.%, insbesondere weniger als 30 Gew.%, bezogen auf alle Amine der Komponente (b).

Als von der Formel I verschiedene primäre Monoamine können alle Monoamine eingesetzt werden, die zusammen mit dem β-Hydroxyamin der Formel I ein flüssiges Gemisch bilden.

Beispielsweise eignen sich als solche primäre Monoamine Anilin, Benzylamin, Cyclohexylamin, Äthanolamin, 2-Äthylhexylamin, 2-Phenyläthylamin, 3-(2-Äthylhexoxy)-propylamin, n-Octylamin, 2-Butoxyäthylamin, 2-(2-Hydroxyäthoxy)-äthylamin-1, 3-Isopropoxy-propylamin-1 oder 3-Amino-2,2-dimethyl-propan-1-ol. Diese Verbindungen sind bekannt und zum Teil im Handel erhältlich.

Als primäre oder sekundäre Diamine sind ebenfalls alle Diamine geeignet, die mit den β-Hydroxyaminen der Formel I ein flüssiges Gemisch bilden. Als primäre Diamine können aliphatische, cycloaliphatische, aromatische oder heterocyclische Amine, wie beispielsweise Bis(4-aminophenyl)-methan, Anilin-Formaldehyd-Harze, Bis(4-aminophenyl)sulfon, Propan-1,3-diamin, Hexamethylendiamin, Diethylentriamin, Triethylentetramin, 2,2,4-Trimethylhexan-1,6-diamin, m-Xylylendiamin, Bis(4-aminocyclohexyl)-methan, 2,2-Bis(4-aminocyclohexyl)propan, 3-Aminomethyl-3,5,5-trimethylcyclohexylamin (Isophorondiamin) oder Bis-(3-methyl-4-aminocyclohexyl)-methan verwendet werden.

Als sekundäre Diamine (b) sind beispielsweise Piperazin, N,N′-Dicyclohexylhexamethylendiamin-1,6 oder N,N′-Bis-(β-cyanoäthyl)-hexamethylendiamin-1,6 geeignet. Die genannten primären und sekundären Diamine stellen bekannte Verbindungen dar und sind grösstenteils im Handel erhältlich.

Vorzugsweise verwendet man als Komponente (b) ein β-Hydroxyamin der Formel I, ein Gemisch aus β-Hydroxyaminen der Formel I oder ein Gemisch aus einem oder mehreren β-Hydroxyaminen der Formel I und einem primären Diamin.

Die tertiären Amine (c), die als katalytisch wirkende Härtungsmittel eingesetzt werden, stellen ebenfalls bekannte, zum Teil im Handel erhältliche Härtungsmittel für Epoxidharz dar. Solche werden beispielsweise von H. Lee und K. Neville im "Handbook of Epoxy Resins", 1967, Kapitel 9, beschrieben, wie beispielsweise Benzyldimethylamin, 2-(Dimethylaminomethyl)-phenol oder 2,4,6-Tris-(dimethylaminomethyl)-phenol. Neben den dort genannten Verbindungen können auch die in der EP-A1 0 018 949 offenbarten oder die bekannten Imidazolverbindungen der Formeln 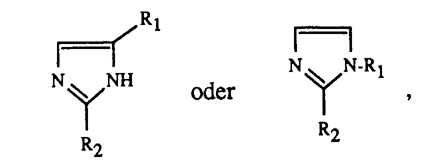 worin R₁ und R₂ unabhängig voneinander je für ein H-Atom, Methyl, Äthyl, Propyl, oder Phenyl stehen, verwendet werden. Die Imidazolverbindungen der angegebenen Formeln stellen bevorzugte katalytische Härtungsmittel dar.

Als Verstärkungsfasern für den erflndungsgemässen Faserverbund können die üblichen bei der Faserverstärkung von Werkstoffen verwendeten Fasern eingesetzt werden. Diese können organische oder anorganische Fasern, Naturfasern oder Synthesefasern sein und in Form von Geweben oder Gelegen, Vliesen oder Matten sowie in Form von Fasersträngen (Rovings), als Stapelfasern oder Endlosfasern vorliegen. Beispielsweise verwendet man als Verstärkungsfasern Glas-, Asbest-, Bor-, Kohlenstoff- oder Metallfasern sowie Aramidfasern, hochfeste Polyesterfasern oder Naturfasern aus Baumwolle oder Zellwolle. Solche Fasern und Gewebe daraus sind im Handel erhältlich.

Das Beschichten dieser Fasern bzw. Gewebe mit dem lösungsmittelfreien Epoxidharzgemisch kann nach den üblichen Imprägniermethoden, durch Bestreichen, Besprühen, oder Eintauchen, mittels Strangziehtechnik oder bei Endlosfasern nach dem Präzisionsfaserwicklungsverfahren (filament-winding) erfolgen.

Die mit dem Matrixharz beschichteten Fasermaterialien können an der Luft bei Raumtemperatur getrocknet werden, wobei das Matrixharz relativ rasch in den noch schmelzbaren bzw. härtbaren B-Zustand umgewandelt wird und man sogenannte Prepregs erhält, die bei Raumtemperatur mehrere Tage lagerstabil sind. Da das zum Imprägnieren verwendete Matrixharz lösungsmittelfrei ist, erübrigt sich ferner vor der Endhärtung der Verfahrensschritt für die restlose Entfernung des Lösungsmittels aus dem Faserverbund, der erforderlich ist, damit im gehärteten Verbundstoff keine Poren bzw. Löcher durch Verdampfen von restlichem Lösungsmittel entstehen.

Die Herstellung von Prepregs aus dem erfindungsgemässen Faserverbund ist daher mit dem Vorteil verbunden, dass weder zum Verdampfen des Lösungsmittels noch zur Vorverlängerung des Harzes die entsprechenden Verfahrensschritte notwendig sind und kein Aufwand an Wärmeenergie erforderlich ist.

Der erfindungsgemässe Faserverbund liegt vorzugsweise in Form von Prepregs vor, die in bekannter Weise zur Herstellung von Laminaten verwendet werden können.

Die erfindungsgemässen Prepregs können bei Raumtemperatur bis unterhalb von 120°C voll ausgehärtet werden und sind daher vorteilhaft zur Herstellung von Faserverbundsystemen mit anderen Werkstoffen, insbesondere solchen, die Temperaturen oberhalb von 120°C schlecht vertragen, wie Holz oder Kunststoffe mit niedrigem Erweichungspunkt, wie beispielsweise ABS-Polymerisate, Polyäthylen oder PVC, geeignet.

Gegenstand vorliegender Erfindung ist somit auch ein Faserverbundsystem, insbesondere ein Faserverbund-Laminat, das aus dem erfindungsgemässen Faserverbund und gegebenenfalls zusammen mit anderen Werkstoffen unter Formgebung und Vernetzen der Harzmatrix erhalten wird.

Der in den folgenden Beispielen angegebene Harzfluss wird wie folgt bestimmt: 2 quadratische Prepregstücke von 5 cm Kantenlänge werden genau aufeinandergelegt, dann zwischen 2 Trennpapieren oder Folien in eine auf 100°C vorgewärmte Presse gelegt. Diese wird sofort bis auf einen Druck von 2 MPa geschlossen. Nach 5 min. wird das so entstandene Laminat der heissen Presse entnommen und das bei den Kanten ausgetretene Harz gemessen. Für einen ausreichenden Fluss muss dieses mindestens 5 mm lang sein.

Die Brauchbarkeit eines Prepregs wird üblicherweise an Hand seines Flusses bestimmt. Wenn der Fluss zu Klein ist, d.h. kleiner als 5 mm, kann in der Regel ein Prepreg nicht mehr zu einem guten Laminat verpresst werden.

Die Glasumwandlungstemperatur (T_{G}) wird auf einem thermomechanischen Analysator TMA 40 der Fa. Mettler AG, bestimmt. Die Last auf dem eindringenden Stempel beträgt 0,5 N/mm², Aufheizgeschwindigkeit = 10°C/min. Das Gerät bestimmt die T_{G} vollautomatisch.

Die in den Beispielen verwendeten β-Hydroxyamine der Formel I werden wie folgt hergestellt:

### 2-Hydroxy-3-butoxypropylamin

In einem 10 Liter Planschliffgefäss, versehen mit Kühler, Tropftrichter, Thermometer und Rührer, werden 4,987 Liter (73,3 Mol) wässrige Ammoniaklösung (25%ig) und 2,0 Liter Ethylalkohol vorgelegt. Bei 22°C werden dem Gemisch innerhalb etwa 1 Stunde 911,33 g (7,00 Mol) Butylglycidyläther unter Rühren zugetropft. Die Temperatur steigt dabei auf etwa 35°C. Das Reaktionsgemisch wird noch während 4 Stunden nachgerührt, und anschliessend wird das Lösungsmittel bei 80-90°C/39 mbar eingeengt. Es resultieren 960,0 g eines dünnflüssigen Öls, welches im Gaschromatographen eine Reinheit von 75 % aufweist. Das Rohprodukt wird am Hochvakuum destilliert, wobei bei 76° bis 78°C/0,013-0,026 mbar 485,0 g 2-Hydroxy-3-butoxypropylamin mit einer Reinheit von 97 % gemäss Gaschromatogramm erhalten werden.

### 2-Hydroxy-3-(o-sek.-butylphenoxy)-propylamin

In einem mit Stickstoff gespülten 2,5 Liter Autoklaven werden 429 g (2,1 Mol) o-sek.-Butylphenylglycidylether und 30,2 g Wasser bei Raumtemperatur vorgelegt. Dann presst man innerhalb von 5 Minuten 698,5 g (41,08 Mol) Ammoniakgas auf und erwärmt das Reaktionsgemisch anschliessend innerhalb von 2 Stunden auf 80°C. Nach 1 Stunde Reaktionszeit bei 80°C kühlt man auf Raumtemperatur ab, entspannt die Apparatur und engt das Reaktionsprodukt am Rotationsverdampfer bei 80°C/0,13 mbar ein. Gemäss Gaschromatogramm ist das erhaltene Amin zu 92,5 % rein. Es weist bei 35°C eine Viskosität von 1240 mPa·s auf.

### 2-Hydroxy-3-(o-kresyloxy)-propylamin

Wie zuvor angegeben wird in einem Autoklaven die Ammoniakanlagerung an o-Kresylglycidylether vorgenommen. Das erhaltene Amin weist eine Reinheit von 96 % auf und besteht aus farblosen Kristallen mit einem Schmelzpunkt von 64°C.

### 2-Hydroxy-3-[2,6-bis(sek.-butyl)-phenoxy]-propylamin

In einem mit Stickstoff gespülten 2,5-Liter Autoklaven werden 440 g (1,677 Mol) 2,6-Bis-(sek.-butyl)-phenylglycidylether und 30,2 g Wasser bei Raumtemperatur vorgelegt. Dann presst man innerhalb von 5 Minuten 698,5 g (41,08 Mol) Ammoniakgas auf und erwärmt das Reaktionsgemisch anschliessend innerhalb von 2 Stunden auf 80°C. Nach 1 Stunde Reaktionszeit bei 80°C kühlt man auf Raumtemperatur ab, entspannt die Apparatur und engt das Reaktionsprodukt am Rotationsverdampfer bei 80°C/0,13 mbar ein. Man erhält 436,1 g (93 % der Theorie) eines bräunlichen, flüssigen Rohprodukt das durch Kurzwegdestillation gereinigt wird. Der Siedepunkt beträgt 170°C/0,13 mbar und der Amingehalt 3,548 mAequiv./g (= 99,1 % der Theorie). Beispiel 1: 100 g Bisphenol A-diglycidylether mit einem Epoxidgehalt von 5,35 Äquivalenten/kg werden mit 13,7 g 2-Hydroxy-3-butoxy-propylamin (0,35 NH-Äquivalente/Epoxidäquivalente) und 2,7 g (0,01 Mole) 2,4,6-Tris-(dimethylaminomethyl)-phenol gemischt. Mit dieser Mischung wird bei Raumtemperatur (RT) mit einem Laminierhaken ein Glasgewebe (Interglas 92146) imprägniert. Das so erhaltene Prepreg wird zwischen zwei Polyethylenfolien bei Raumtemperatur liegengelassen, und von Zeit zu Zeit werden Veränderungen seiner Eigenschaften verfolgt.
Gelierzeit bei 100°C (Heizplatte):
Frische Mischung = 10 min 35 sek
nach 1 Tag Lagerung bei RT = 7 min 45 sek
Wärmefestigkeit des Prepregs nach Härtung bei 100°C während 60 min: T_{G} = 79°C.
Wärmefestigkeit des einen Tag bei RT gelagerten Prepregs nach Härtung bei 100°C während 30 min: T_{G} = 78°C.

Beispiel 2: Es wird ein Gemisch hergestellt aus 100 g Bisphenol A-diglycidylether mit einem Epoxidgehalt von 5,35 Äquivalenten/kg, 19,5 g 2-Hydroxy-3-butoxypropylamin (0,485 NH-Äquivalente/Epoxidäquivalent) und 15,8 g Bis-(3-methyl-4-aminocyclohexyl)-methan (0,5 NH-Äquivalente/Epoxidäquivalent). Mit dieser Mischung werden wie in Beispiel 1 Prepregs hergestellt.
Gelierzeit bei 100°C (Heizplatte):
Frische Mischung = 7 min 40 sek
Prepreg nach 1 Tag Lagerung bei RT = 4 min 5 sek
Prepreg nach 2 Tagen Lagerung bei RT = 2 min 59 sek
Prepreg nach 5 Tagen Lagerung bei RT = 35 sek.

Nach etwa 1 Tag Lagerung bei RT ist das Prepreg nicht mehr klebrig. Nach 7 Tagen Lagerung bei RT weist das Laminat noch immer einen Harzfluss von 5 mm auf, d.h., die Lagerfähigkeit des Prepregs bei RT beträgt mindestens 7 Tage.
Wärmefestigkeit des Prepregs nach Härtung bei 100°C während 20 min: T_{G} = 63°C.

Beispiele 3 bis 5: Aus den in der folgenden Tabelle 1 angegebenen Komponenten werden gemäss Beispiel 1 Mischungen hergestellt, die zu Prepregs und Laminaten verarbeitet werden und deren Eigenschaften ebenfalls in Tabelle 1 angegeben sind.
Epoxidharz A: Bisphenol F-diglycidylether mit einem Epoxidgehalt von 6,2 Äquivalenten/kg und einer Viskosität von 6000 mPa·s bei 25°C.
Epoxidharz B: Gemisch aus 85 g Bisphenol A-diglycidylether und 15 g Butandiol-1,4-diglycidylether mit einem Mischepoxidgehalt von 5,85 Äquivalenten/Kg und einer Mischviskosität von 1250 mPa·s bei 25°C.
Epoxidharz C: Gemisch aus 96 g Bisphenol A-diglycidylether und 4 g Butandiol-1,4-diglycidylether mit einem Mischepoxidgehalt von 5,7 Äquivalenten/Kg und einer Mischviskosität von 4000 mPa·s bei 25°C.
Amin I: Flüssiges Gemisch aus 55,7 g 2-Hydroxy-3-(o-sek.-butylphenoxy)-propylamin und 44,24 g 2-Hydroxy-3-(o-kresyloxy)-propylamin.

Die Bestimmung der Topfzeit wurde nach Tecam gemäss British Standard 3532 (1967) mit einem Tecam®-Geltimer-Gerät der Fa. Techma Ltd., Cambridge, durchgeführt. Dabei wird die Zeit bestimmt, bis sich ein in 100 g Harz/Härter-Mischung auf und ab bewegender Stempel infolge Gelierung der Masse nicht mehr bewegen kann (Start-temperatur 23°C).

**Tabelle 1**

| Beispiel | 3 | 4 | 5 |
|---|---|---|---|
| Epoxidharz A (g) | 100 | | |
| Epoxidharz B (g) | | 100 | |
| Epoxidharz C (g) | | | 100 |
| Epoxidäquivalente | 0,62 | 0,585 | 0,57 |
| Amin I (g) | 26 | 26 | 26 |
| NH-Äquivalente | 0,24 | 0,24 | 0,24 |
| NH-Äquivalente/Epoxidäquivalent | 0,39 | 0,41 | 0,42 |
| Bis-(3-methyl-4-aminocylcohexyl)-methan (g) | 3,6 | 3,5 | 3,5 |
| NH-Äquivalente | 0,061 | 0,059 | 0,059 |
| NH-Äquivalente/Epoxidäquivalent | 0,098 | 0,101 | 0,104 |
| 2-Methylimidazol (g) | 1,6 | 1,5 | 1,5 |
| Mole | 0,02 | 0,018 | 0,018 |
| Mole/Epoxidäquivalent | 0,032 | 0,031 | 0,032 |
| Mischviskosität bei 25°C (mPa·s) | 1250 | 1340 | 2890 |
| Topfzeit (TECAM) bei 23°C (min) | 185 | 130 | 191 |
| Gelierzeit bei 100°C, frische Mischung (min' sek") | 12'20" | 13'25" | 11'55" |
| nach 1 Tag Lagerung bei 23°C | 7'20" | 8'10" | 6'40" |
| nach 2 Tagen Lagerung bei 23°C | 6' | 5'45" | 6' |
| nach 5 Tagen Lagerung bei 23°C | 2'35" | 45" | 2'24" |
| Reifung des Prepregs bei 20°C, trockene B-Stufe nach (h) | 7 | 7 | 6 |
| Lagerung des Prepregs bei 23°C, genügender Fluss noch nach (Tagen) | 10 | 5-6 | 14 |

| T_{G} des gehärteten Laminates nach Härtung | | | |
|---|---|---|---|
| 1 Tag bei 23°C und 20 min bei 100°C | 82° | 79° | 90° |
| 1 Tag bei 23°C und 30 min bei 100°C | 89° | 77° | 90° |

Beispiele 6 bis 8: Aus den in Tabelle 2 angegebenen Mengen bezüglich Harz, Härter und Beschleuniger werden bei Raumtemperatur homogene Mischungen hergestellt. Mit jeder Mischung werden Glasgewebsstücke (Interglas 91 745 mit einem Flächengewicht von 294 g/m²) so imprägniert, dass ein Harzgehalt von etwa 38 bis 46 Gew.-% resultiert. Jedes imprägnierte Glasgewebsstück wird zwischen zwei Polyethylenfolien im Klimaraum gelagert und täglich bezüglich Flexibilität, Klebrigkeit, Gelierzeit und Fluss (bei 100°C) beurteilt.
Nach 1 Tag Lagerung werden zwei 5x5 cm grosse Stücke, die mit der gleichen Harzmischung imprägniert sind, zwischen 2 Trennfolien in einer auf genau 100°C eingestellten Presse mit nur 5 bar Druck während genau 20 Minuten gehärtet.
Epoxidharz D: Bisphenol F-diglycidylether mit einem Epoxidgehalt von 6,1 Äquivalenten/kg und einer Viskosität von 1500 mPa·s bei 25°C.
Epoxidharz E: Bisphenol A-diglycidylether mit einem Epoxidgehalt von 5,3 Äquivalenten/kg und einer Viskosität von 10000 bis 12000 mPa·s bei 25°C.
Epoxidharz F: Butandiol-1,4-digylcidylether mit einem Epoxidgehalt von 8,9 Äquivalenten/kg und einer Viskosität von 15 mPa·s bei 25°C.

**Tabelle 2**

| Beispiel | 6 | 7 | 8 |
|---|---|---|---|
| Epoxidharz D (g) | 100 | | |
| Epoxidharz E (g) | | 85 | 85 |
| Epoxidharz F (g) | | 15 | 15 |
| Epoxidäquivalente | 0,61 | 0,58 | 0,58 |
| 2-Hydroxy-3-[2,6-bis-(sek.-butyl)-phenoxy]-propylamin (g) | 48,4 | 34,0 | 39,0 |
| 3,3′-Dimethyl-4,4′-diaminodicyclohexylmethan (g) | | 3,5 | |
| 4-(3-Aminopropyl)-morpholin (g) | | | 2,9 |
| NH-Äquivalente | 0,3 | 0,271 | 0,284 |
| 1-Methylimidazol (g) | 2,5 | 2,0 | 2,0 |
| Mole | 0,03 | 0,024 | 0,024 |
| Mischviskosität bei 25°C (mPa·s) | 1700 | 1670 | 1484 |
| Topfzeit (TECAM) bei 23°C (min) | 378 | 351 | 287 |
| Gelierzeit bei 100°C, frische Mischung (min' sek") | 13'30" | 13'10" | 13'35" |
| nach 1 Tag Lagerung bei 23°C | 7'40" | 7'20" | 9'00" |
| nach 5 Tagen Lagerung bei 23°C | 3'25" | 50" | 1'30" |
| nach 12 Tagen Lagerung bei 23°C | 55" | | |
| Lagerung des Prepregs bei 23°C, genügender Fluss noch nach (Tagen) | 14 | 5 | 4-5 |
| T_{G} des gehärteten Laminates nach Härtung | | | |
| 1 Tag bei 23°C und 20 min bei 100°C (°C) | 75 | 79 | 70 |

## Patentansprüche

1. Mit einer lösungsmittelfreien, härtbaren Epoxidharzmatrix imprägnierter Faserverbund, wobei zum Imprägnieren eine härtbare Epoxidharzmatrix, enthaltend
(a) ein flüssiges Epoxidharz oder ein flüssiges Epoxidharzgemisch,
(b) ein flüssiges β-Hydroxyamin der Formel I 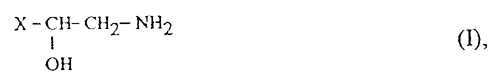 worin X für Phenyl oder den Rest R-O-CH₂- steht, wobei R ein alkylsubstituiertes Phenyl mit 1 bis 4C-Atomen im Alkylrest bedeutet, ein flüssiges Gemisch von β-Hydroxyaminen der Formel I oder ein flüssiges Gemisch aus einem oder mehreren β-Hydroxyaminen der Formel I und einem von der Formel I verschiedenen primären Monoamin oder einem primären oder sekundären Diamin und gegebenenfalls
(c) ein katalytisch härtendes tertiäres Amin, verwendet wurde, wobei in der härtbaren Epoxidharzmatrix pro 1 Epoxidäquivalent des Epoxidharzes (a) 0,15 bis 1,2 Aminwasserstoffäquivalente der Aminkomponente (b) und 0 bis 0,1 Mole des tertiären Amins (c) enthalten sind.

2. Faserverbund gemäss Anspruch 1, enthaltend in der härtbaren Epoxyharzmatrix pro 1 Epoxyäquivalent 0,7 bis 1,1 Aminwasserstoffäquivalente der Aminkomponente (b) und 0 bis 0,06 Mole des tertiären Amins (c).

3. Faserverbund gemäss Anspruch 1, enthaltend eine härtbare Epoxidharzmatrix, die aus den Komponenten (a), (b) und (c) besteht.

4. Faserverbund gemäss Anspruch 1, enthaltend ein flüssiges β-Hydroxyamin der Formel I, worin X ein Phenyl oder den Rest R-O-CH₂- bedeutet, wobei R ein einfach alkylsubstituiertes Phenyl mit 1 bis 4 C-Atomen im Alkylrest darstellt.

5. Faserverbund gemäss Anspruch 1, enthaltend als Komponente (b) ein β-Hydroxyamin der Formel I, ein Gemisch aus β-Hydroxyaminen der Formel I oder ein Gemisch aus einem oder mehreren β-Hydroxyaminen der Formel I und einem primären Diamin.

6. Faserverbund gemäss Anspruch 1 oder 3, dadurch gekennzeichnet, dass die Komponente (c) eine Imidazolverbindung ist.

7. Faserverbund gemäss Anspruch 1, dadurch gekennzeichnet, dass er in Form eines Prepregs vorliegt.

8. Faserverbundsystem, insbesondere Faserverbund-Laminat, hergestellt aus dem Faserverbund gemäss Anspruch 1 und gegebenenfalls anderen Werkstoffen unter Formgebung und Vernetzen der Harzmatrix.

## Claims

1. A fibre composite impregnated with a solvent-free, curable epoxy resin matrix, wherein the curable epoxy resin matrix which has been used for the impregnation comprises
(a) a liquid epoxy resin or a liquid epoxy resin mixture,
(b) a liquid β-hydroxyamine of formula I 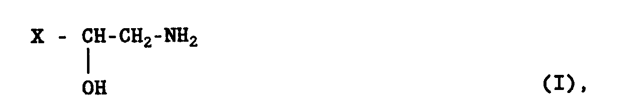 in which X is phenyl or the radical R-O-CH₂- where R is an alkylsubstituted phenyl having 1 to 4 carbon atoms in the alkyl radical, a liquid mixture of β-hydroxyamines of formula I or a liquid mixture of one or more β-hydrozyamines of formula I and of a primary monoamine different from formula I or of a primary or secondary diamine, and if desired
(c) a catalytically curing tertiary amine, said curable epoxy resin matrix containing 0.15 to 1.2 amine hydrogen equivalents of the amine component (b) and 0 to 0.1 mol of the tertiary amine (c) per 1 epoxide equivalent of the epoxy resin (a).

2. A fibre composite according to claim 1, comprising 0.7 to 1.1 amine hydrogen equivalents of the amine component (b) and 0 to 0.06 mol of the tertiary amine (c) per 1 epoxide equivalent.

3. A fibre composite according to claim 1, comprising a curable epoxy resin matrix consisting of components (a), (b) and (c).

4. A fibre composite according to claim 1, comprising a liquid β-hydroxyamine of formula I in which X is phenyl or the radical R-O-CH₂-where R is a monoalkyl-substituted phenyl having 1 to 4 carbon atoms in the alkyl radical.

5. A fibre composite according to claim 1, comprising as component (b) a β-hydroxyamine of formula I, a mixture of β-hydroxyamines of formula I or a mixture of one or more β-hydroxyamines of formula I and a primary diamine.

6. A fibre composite according to claim 1 or 3, wherein component (c) is an imidazole compound.

7. A fibre composite according to claim 1, which is in the form of a prepreg.

8. A fibre composite system, especially a fibre composite laminate, prepared from the fibre composite according to claim 1, and optionally other materials, with shaping and crosslinking of the resin matrix.

## Revendications

1. Matériau composite renforcé de fibres imprégné d'une matrice résine époxyde durcissable sans solvant utilisant pour l'imprégnation une résine époxyde matrice durcissable contenant
(a) une résine époxyde liquide ou un mélange de résines époxydes liquides,
(b) une β-hydroxylamine liquide de formule I 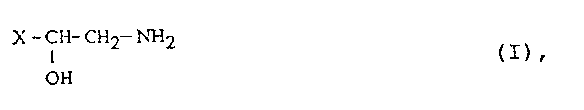 dans laquelle X représente phényle ou le radical R-O-CH₂-, R étant un phényle substitué par alkyle avec 1 à 4 atomes de carbone dans le radical alkyle, un mélange liquide de β-hydroxylamines de formule I ou un mélange liquide d'une ou de plusieurs hydroxylamines de formule I et d'une monoamine primaire ou d'une diamine primaire ou secondaire différente de formule I et éventuellement
(c) une amine tertiaire catalytiquement durcissable, dans la résine époxyde matrice sont contenues pour 1 équivalent de résine époxyde (a) de 0,15 à 1,2 équivalent d'hydrogène d'amine du constituant amine (b) et de 0 à 0,1 mole de l'amine tertiaire (c).

2. Composite renforcé de fibres selon la revendication 1 contenant dans la résine époxyde matrice durcissable pour 1 équivalent d'époxyde de 0,7 à 1,1 équivalent d'hydrogène d'amine du constituant amine (b) et de 0 à 0,06 mole de l'amine tertiaire (c).

3. Composite renforcé de fibres selon la revendication 1 contenant une résine époxyde matrice durcissable constituée des constituants (a), (b) et (c).

4. Composite renforcé de fibres selon la revendication 1 contenant une β-hydroxylamine liquide de formule I dans laquelle X représente un phényle ou le radical R-O-CH₂, R étant un phényle une fois substitué par alkyle avec 1 à 4 atomes de carbone dans le radical alkyle.

5. Composite renforcé de fibres selon la revendication 1 contenant comme constituant (b) une β-hydroxylamine de formule I, un mélange de β-hydroxylamines de formule I ou un mélange d'une ou plusieurs β-hydroxylamines de formule I et d'une diamine primaire.

6. Composite renforcé de fibres selon la revendication 1 ou 3, caractérisé en ce que le constituant (c) est un composé d'imidazole.

7. Composite renforcé de fibres selon la revendication 1, caractérisé en ce qu'il se présente sous forme d'un prépreg.

8. Système composite renforcé de fibres en particulier un stratifié de composite renforcé de fibres préparé à partir du composite renforcé de fibres selon la revendication 1 et éventuellement d'autres matériaux, en moulant et en réticulant la résine matrice.
